(19) Europäisches Patentamt
European Patent Office
Office européen des brevets

(11) **EP 2 801 176 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **13724151.9**

(22) Anmeldetag: **19.04.2013**

(51) Int Cl.:
*H04L 12/913* (2013.01)    *H04L 12/911* (2013.01)
*H04L 12/841* (2013.01)    *H04L 12/931* (2013.01)

(86) Internationale Anmeldenummer:
**PCT/AT2013/050092**

(87) Internationale Veröffentlichungsnummer:
**WO 2013/155547 (24.10.2013 Gazette 2013/43)**

(54) **SELBSTORGANISIERENDES VERFAHREN ZUM AUFBAU VON DETERMINISTISCHEN ROUTEN IN EINEM GROSSEN COMPUTERNETZWERK**

SELF-ORGANIZING METHOD FOR ESTABLISHING DETERMINISTIC ROUTES IN A LARGE COMPUTER NETWORK

PROCÉDÉ D'AUTO-ORGANISATION POUR LA CONSTRUCTION D'ITINÉRAIRES DÉTERMINISTES DANS UN GRAND RÉSEAU INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2012   AT 4742012**

(43) Veröffentlichungstag der Anmeldung:
**12.11.2014   Patentblatt 2014/46**

(73) Patentinhaber: **TTTech Computertechnik AG 1040 Wien (AT)**

(72) Erfinder: **STÖGER, Georg A-1180 Wien (AT)**

(74) Vertreter: **Patentanwaltskanzlei Matschnig & Forsthuber OG Biberstraße 22 Postfach 36 1010 Wien (AT)**

(56) Entgegenhaltungen:
EP-A2- 0 762 799    WO-A1-01/88746

- **MUGUREL IONUT ANDREICA ET AL: "Fairness and QoS Enhancement Models and Techniques for Peer-to-Peer Content Sharing Systems", SYMBOLIC AND NUMERIC ALGORITHMS FOR SCIENTIFIC COMPUTING (SYNASC), 2009 11TH INTERNATIONAL SYMPOSIUM ON, IEEE, PISCATAWAY, NJ, USA, 26. September 2009 (2009-09-26), Seiten 181-188, XP031673998, ISBN: 978-1-4244-5910-0**
- **YING-HONG WANG ET AL: "Interfering-aware QoS multipath routing for ad hoc wireless network", ADVANCED INFORMATION NETWORKING AND APPLICATIONS, 2004. AINA 2004. 18T H INTERNATIONAL CONFERENCE ON FUKUOKA, JAPAN 29-31 MARCH 2004, PISCATAWAY, NJ, USA,IEEE, Bd. 1, 29. März 2004 (2004-03-29), Seiten 29-34, XP010695390, DOI: 10.1109/AINA.2004.1283883 ISBN: 978-0-7695-2051-3**
- **CHAVEZ A ET AL: "Challenger: a multi-agent system for distributed resource allocation", PROCEEDINGS OF THE FIRST INTERNATIONAL CONFERENCE ON AUTONOMOUS AGENTS MARINA DEL REY, CA., FEB. 5 - 8, 1997; [PROCEEDINGS OF THE INTERNATIONAL CONFERENCE ON AUTONOMOUS AGENTS], NEW YORK, ACM, US, Bd. CONF. 1, 5. Februar 1997 (1997-02-05), Seiten 323-332, XP002092534, DOI: 10.1145/267658.267736 ISBN: 978-0-89791-877-0**

• KOPETZ H ET AL: "The Time-Triggered Ethernet (TTE) Design", OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005, PISCATAWAY, NJ, USA,IEEE, 18. Mai 2005 (2005-05-18), Seiten 22-33, XP010801230, DOI: 10.1109/ISORC.2005.56 ISBN: 978-0-7695-2356-9

• Mirko Jakovljevic ET AL: "Deterministic Ethernet - TTEthernet", , 8 February 2011 (2011-02-08), pages 1-12, XP055414627, Retrieved from the Internet: URL:https://www.slideshare.net/TTTech/dete rministic-ethernet-ttethernetgeneral [retrieved on 2017-10-11]

**Beschreibung**

Die Erfindung betrifft ein Verfahren zur Erstellung von zeitgesteuerten deterministischen Kommunikationsrouten in einem großen Computernetzwerk, wobei alle betroffenen Endsysteme und Switches des Computernetzwerkes über eine globale Zeit verfügen, wobei aufbauend auf eine bestehende zeitgesteuerte Kommunikationsroute zwischen zwei oder mehreren Endsystemen des Computernetzwerkes eine zeitgesteuerte deterministische Kommunikationsroute mit garantierter Bandbreite und minimaler Verzögerung für die Übertragung von zeitgesteuerten Nachrichten zwischen Endsystemen generiert wird, wobei eine Periode durch einen Winkel von 360° beschrieben ist, der Beginn einer Periode mit der globalen Zeit synchronisiert ist, und wobei das Auftreten eines Ereignisses innerhalb einer Periode durch Angabe des Winkels, d.i. die Phase, zwischen dem Beginn der Periode und dem Ereignis charakterisiert ist, und wobei eine zeitgesteuerte Kommunikationsroute zwischen zwei Endsystemen durch Spezifikation der Phase und Periode zu Beginn der Route, der Phase und Periode am Ende der Route, und der Länge der zeigesteuerten Nachricht gekennzeichnet ist.

Die vorliegende Erfindung liegt im Bereich der Computertechnik. Sie beschreibt eine innovative Methode, wie in einem großen Computer Netzwerk zeitgesteuerte (*time-triggered*) Routen nach einem selbstorganisierenden Verfahren aufgebaut werden können.

Solche Netzwerke sind beispielsweise beschrieben in MUGUREL IONUT ANDREIA et al: "Fairness and QoS Enhancement Models and Techniques for Peer-to-Peer Content Sharing Systems", Symbolic and numeric algorithms for scientific computing (SYNASC), 2009, 11th INTERNATIONAL SYMPOSIUM ON, IEEE, PISCATAWAY, NJ, USA, 26. September 2009, KOPETZ et al: "The Time-Triggered Ethernet (TTE) Design", Object-Oriented Real-Time distributed computing, 2005. ISORC 2005, Eighth IEEE International Symposium on Seattle, WA, USA 18-20 May 2005, Piscataway, NJ, USA, IEEE, 18. Mai 2005, sowie in WO 01/88746 A1, wobei insbesondere in den beiden erstgenannten Dokumenten zeitgesteuerte Kommunikation beschrieben ist.

In vielen Anwendungen von großen Computernetzen ist die Verfügbarkeit einer deterministischen Kommunikationsroute mit garantierter Bandbreite und minimaler Verzögerung der Nachrichten zwischen Endsystemen von Vorteil. Zum Beispiel ist in einem Videokonferenzsystem die Unmittelbarkeit der Antwort auf eine Frage des entfernten Partners ein wichtiger Parameter der Service Qualität (QoS). In einem *smart Grid,* in dem periodische Sensordaten über lange physikalische Distanzen übertragen werden müssen, bestimmt die Übertragungsdauer zwischen den dezentralen Subsystemen und der zentralen Warte zu einem wesentlichen Teil die Totzeit eines über das Kommunikationssystem geschlossenen Regelkreises und damit die Qualität der Regelung.

Unter einem großen Computernetzwerk ist allgemein ein Netzwerk zu verstehen, in dem es keine zentrale Instanz gibt, welche die Steuerung des gesamten Netzwerkes vornimmt. Ein Beispiel für ein großes Computernetzwerk ist das Internet.

Eine minimale Verzögerung-und damit die optimale Latenz-einer Übertragung entlang einer gegebenen Route wird erreicht, wenn entlang dieser Route, die aus *Übertragungssegmenten* und *Switches* gebildet wird, die Übertragungswege einer Nachricht phasensynchron sind. Dadurch wird verhindert, dass im Kommunikationssystem unnötige Verweilzeiten der Nachrichten auftreten. Eine solche phasensynchrone Übertragung der Nachrichten erfordert, dass alle beteiligten Endsysteme und Switches über eine globale Zeit mit bekannter Präzision verfügen. Diese Zeitbasis soll fehlertolerant sein [6].

Es ist eine Aufgabe der vorliegenden Erfindung, entlang einer gegebenen Route für einen Datenstrom in einem großen Computernetzwerk mittels eines dezentralen selbstorganisierenden Verfahrens eine deterministische zeitgesteuerte Kommunikationsroute zwischen zwei oder mehr Endsystemen dynamisch aufzubauen.

Diese Aufgabe wird mit einem eingangs erwähnten Verfahren dadurch gelöst, dass erfindungsgemäß ein *Time-Triggered Connection Manager,* TTCM, eines Endsystems

*) die zeitgesteuerte deterministische Kommunikationsroute in einer *Reservierungsphase* durch eine *Reservierungsnachricht* an jeden Netzwerk-Switch der bestehenden Kommunikationsroute bis zum Kommitmentzeitpunkt der Reservierung, KZPT, reserviert,
*) und sodann diese zeitgesteuerte deterministische Kommunikationsroute in einer *Accept Phase* durch eine *Accept Nachricht* an die Netzwerk-Switches der bestehenden Kommunikationsroute vor dem KZPT bestätigt, und wobei

jeder Netzwerk-Switch eigenständig die Reservierung bis zum KZPT entsprechend der an ihn vom TTCM gerichteten *Reservierungsnachricht* durchführt und die garantierte tatsächliche Verweildauer, TVD, einer Nachricht in einem Switch im *Bereitstellungszeitraum* sowie die nötige Verweildauer, NVD, einer Nachricht in einem Switch und Vorschläge, wie durch Änderung der Phase und Periode bei gleicher Bandbreite die TVD in dem Switch reduziert werden kann, dem anfordernden TTCM mitteilt, und nach Annahme der Reservierung durch den TTCM mittels einer *Accept Nachricht* die Reservierung mit einer *Accept Reply* Nachricht an den TTCM bestätigt, und wobei nach Empfang dieser Informationen der TTCM die Phase und Nachrichtenlänge verändert, um in einer nächsten Iteration der Reservierung die TVDs in den Switches zu reduzieren.

Zur Lösung der oben genannten Aufgabe werden entsprechend der Erfindung vom anfordernden Endsystem die Parameter der gewünschten zeitgesteuerten Route (Anfangszeitpunkt der Bereitstellung des Route, Endzeitpunk der Bereitstellung des Route, gewünschte Bandbreite) festgelegt und den in der Route vorhandenen Switches mitgeteilt. Die Switches überprüfen, welche zeitgesteuerte Servicequalität in dem geforderten Zeitintervall bereit gestellt werden kann und reservieren dieses Service bis zu einem in der Anfrage enthaltenen *Kommitmentzeitpunkt (KZPT), d.i.* der Zeitpunkt, bis zu dem die Reservierung garantiert ist. Dabei wird, je nach Auslastung der Switches, eine unterschiedliche Verweildauer der Nachrichten in den einzelnen Switches auftreten. In einem iterativen Verfahren wird nun versucht, die Verweildauern der Nachrichten in den Switches durch Veränderung der Phasenlage und der Nachrichtenlänge so zu minimieren, dass eine gute Servicequalität erreicht wird. Wenn das anfordernde Endsystem die garantierte Servicequalität akzeptiert, so muss es vor dem KZPT mittels einer *Accept Nachricht* eine verbindliche Servicebestellung abgeben und kann dann in dem reservierten Zeitintervall dieses Service in Anspruch nehmen.

Weder in der Patentliteratur [1-5] noch in der wissenschaftlichen Literatur sind Hinweise geoffenbart, die den dynamischen Aufbau einer zeitgesteuerten Route in einem großen Computernetzwerk, wie das Internet, betreffen.

Die vorliegende Erfindung legt somit ein innovatives Verfahren offen, wie in einem großen Computernetzwerk entlang einer bestehenden Route eine deterministische Route mit spezifizierten Serviceparametern dynamisch aufgebaut werden kann. Dabei wird keine zentrale Planungsinstanz vorausgesetzt. In einem selbstorganisierenden Verfahren berechnen die entlang der Route angeordneten Switches die der Anforderung entsprechenden Parameter der zeitgesteuerten Route.

Weitere vorteilhafte Ausgestaltungen des erfindungsgemäßen Verfahrens sind wie folgt beschrieben, die zusätzlich, alternativ oder in beliebiger Kombination miteinander realisiert sein können. Dabei kann vorgesehen sein, dass

*) jeder Netzwerk-Switch eigenständig die Reservierung bis zum KZPT entsprechend der an ihn vom TTCM gerichteten *Reservierungsnachricht* durchführt und die garantierte TVD im *Bereitstellungszeitraum* sowie die NVD und Vorschläge zur Reduzierung der TVD dem anfordernden TTCM mitteilt, und nach Annahme der Reservierung durch den TTCM mittels einer *Accept Nachricht* die Reservierung mit einer *Accept Reply* Nachricht an den TTCM bestätigt;

*) ein Switch eine Reservierung verwirft, wenn er vor dem KZPT keine *Accept Nachricht* von dem die Reservierung anfordernden TTCM erhalten hat;

*) ein Switch eine Reservierung für eine zeitgesteuerte Route nach dem EZPT löscht;

*) der TTCM aufgrund der Informationen über die Güte der Route und den Vorschlägen zur Reduzierung der TVD, die der TTCM von den an der Route beteiligten Switches erhalten hat, die Reservierungsanfrage modifiziert und weitere Iterationen zum Aufbau einer zeitgesteuerten Route über selbige Switches veranlasst;

*) der TTCM die Iterationen abbricht, wenn eine angestrebte Güte der Route erreicht wurde oder wenn eine maximale Anzahl an Iterationen durchlaufen wurde;

*) die zeitgesteuerte Route eine multi-point Topologie aufweist;

*) in einem großen Netzwerk gleichzeitig mehrere TTCMs deterministische Kommunikationsrouten aufbauen können und die Anfragen der TTCMs in den Switches nach der zeitlichen Ordnung des BZPT der Reservierungsnachricht behandelt werden;

*) ein Switch eine Reservierung durch eine Reservierungsnachricht mit einem späteren BZPT, die im Konflikt steht mit einer Reservierung mit einem früheren BZPT, die Reservierung mit der späteren BZPT annulliert;

*) der Nachrichtenverkehr zwischen der TTCM und den Switches durch kryptographische Verfahren gesichert wird.

Die vorliegende Erfindung wird an Hand der folgenden Zeichnung näher erörtert. In dieser zeigt

Fig. 1 eine zyklische Darstellung des Fortschreitens der Echtzeit, und

Fig. 2 die Struktur eines kleinen Teils eines großen Netzwerkes und eine zwischen zwei Endsystemen vorhandene Route.

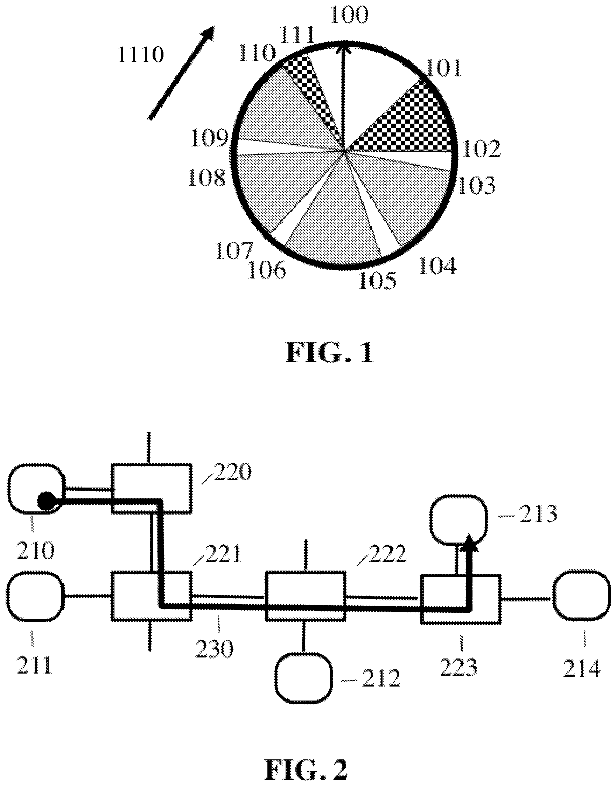

Fig. 1 veranschaulicht eine zyklische Darstellung des Fortschreitens der Echtzeit. In dieser Darstellungsform wird das Fortschreiten der Echtzeit in der Form von Perioden und Phasen dargestellt. In Fig. 1 schreitet die Zeit im Uhrzeigersinn **1110** voran. Der Beginn einer Periode ist zum Zeitpunkt **100** mit der globalen Zeit synchronisiert. Ein Ereignis, das innerhalb einer Periode auftritt (z.B. das Ereignis **101**), wird durch die Angabe des Winkels, d.i. die *Phase,* zwischen dem Beginn der Periode **100** und dem Ereignis **101** charakterisiert. Wenn die Zeit eine volle Periode - d.i. einen Winkel von 360 Grad - durchlaufen hat, so beginnt die *Folgeperiode.* In der Folgeperiode haben die zeitgesteuerten Aktionen die gleiche Phase wie in der vorangegangenen Periode. Das zyklische Bild des Fortschreitens der Echtzeit eignet sich besonders gut, um periodische Prozesse, wie sie in zeitgesteuerten Echtzeitsystemen auftreten, darzustellen.

Fig. 2 zeigt einen kleinen Teil eines großen Computernetzwerkes. In Fig. 2 sind die fünf Endsysteme **210, 211, 212, 213, 214** und die vier Switches **220, 221, 222, 223** dargestellt. Zusätzlich ist in Fig. 2 die Route **230** vom Endsystem **210** über die Switches **220, 221, 222, 223** zum Endsystem **213** eingetragen.

Der zeitliche Ablauf einer Nachrichtenübertragung entlang der Route 230 ist in Fig. 1 dargestellt. Zum Zeitpunkt **101** beginnt das Endsystem **210** (der sendende Rechnerknoten) mit der Übertragung einer Nachricht. Zum Zeitpunkt **102,** nach der *Anfangslatenz,* trifft das erste Bit dieser Nachricht beim Switch **220** ein. Die Nachricht verweilt im Switch bis zum Zeitpunkt **103,** zu dem das erste Bit der Nachricht den Switch **220** in Richtung Switch **221** verlässt. Zum Zeitpunkt **104** trifft das erste Bit der Nachricht beim Switch **221** ein. Wir bezeichnen die Dauer zwischen dem Ereignis **102** und dem Ereignis **104** vereinfacht als die *Verweildauer* der Nachricht im Switch **102.** Dieser Begriff der Verweildauer umfasst nicht nur die unmittelbare Verweildauer im Switch, sondern auch die Zeit für den Transport des ersten Bits der Nachricht über den Kommunikationskanal zum folgenden Nachrichtenempfänger. Der beschriebene Vorgang wiederholt sich bis zum Zeitpunkt **108,** zu dem die Nachricht beim Switch **223** unmittelbar vor dem empfangenden Endsystem **213** eintrifft. Nach der Verweildauer im Switch **223** trifft das erste Bit der Nachricht zum Zeitpunkt **110** beim Endsystem **213** ein. Die Übertragung der Nachricht ist zum Zeitpunkt **111,** dem Zeitpunkt zu dem das letzte Bit der Nachricht beim Endsystem **213** eingetroffen ist, abgeschlossen. Das Zeitintervall (**110,111**) bezeichnen wir als *Endlatenz.*

Im Folgenden werden weitere Begriffe, die in diesem Dokumentverwendet werden, erklärt. Eine zeitgesteuerte Route zwischen zwei Endsystemen ist gekennzeichnet durch die genaue Spezifikation der *Phase und Periode* [sec] *am Beginn* der Route, der *Phase und Periode am Ende* der Route, und der *Länge* [Bit] *einer zeitgesteuerten Nachricht.* Diese Parameter bestimmen die *Echtzeiteigenschaften* einer Route. Die *Bandbreite* [Bit/Sekunde] *der zeitgesteuerten Route* ergibt sich aus

$$Bandbreite = (Länge\ einer\ Nachricht)/Periode.$$

Eine gewünschte Bandbreite kann entweder durch kurze Nachrichten mit kurzer Periode (oder hoher Frequenz) oder längeren Nachrichten mit längeren Perioden erreicht werden. Eine zeitgesteuerte Route ist in physikalische Segmente strukturiert, die über Switches verbunden werden. Die physikalischen Bandbreiten entlang einer zeitgesteuerten Route können in den einzelnen Segmenten unterschiedlich sein. Die *minimale Dauer,* die das erste Bit einer zeitgesteuerten Nachricht benötigt, um vom Eintreffen in einem Switch bis zum Eintreffen in den Folgeswitch (oder dem Endsystem) zu gelangen, bezeichnet wird als die *nötige Verweildauer der Nachricht (NVD) im Switch.* Die tatsächliche Verweildauer, die eine zeitgesteuerte Nachricht benötigt, um vom Eintreffen in einem Switch bis zum Eintreffen in den Folgeswitch (oder dem Endsystem) zu gelangen, bezeichnen wir als *tatsächliche Verweildauer (TVD) der Nachricht im Switch.* Die Differenz zwischen der nötigen Verweildauer und der tatsächlichen Verweildauer bezeichnen wir als *Slack* der Nachricht. In einer optimalen zeitgesteuerten Route ist die Summe der *Slacks* in allen Switches gleich Null.

Wenn eine direkte physikalische Verbindung zwischen den Endsystemen besteht, so ergibt sich die Latenz einer Nachrichtenübertragung zu

$$Latenz = Anfangslatenz + Endlatenz$$

Die Latenz einer zeitgesteuerten Nachricht entlang eines zeitgesteuerten Route mit N Switches ergibt sich auf Kanälen mit identischer physikalischer Bandbreite zu

$$Tatsächliche\ Latenz = Anfangslatenz + TVD\ in\ allen\ N\ Switches + Endlatenz$$

$$Minimale\ Latenz = Anfangslatenz + NVD\ in\ allen\ N\ Switches + Endlatenz$$

Die Güte einer zeitgesteuerten Route wird durch das Verhältnis

$$Güte = (Tatsächliche\ Latenz)/(Minimale\ Latenz)$$

ausgedrückt. Im Idealfall ist dieses Verhältnis eins.

Wenn das Endsystem **210** entlang der Route **230** eine zeitgesteuerten Route für einen Datenstrom zu errichten beabsichtigt, so wird vorzugsweise folgendes dreistufiges Verfahren abgewickelt.

In der ersten Phase (*Anfragephase*) sendet der *Time-Triggered Connection Manager* (TTCM) des Endsystems **210** eine *unverbindliche Anfrage* mit folgendem Inhalt an alle in der Route angeordneten Switches

- Gewünschte zeitgesteuerte Bandbreite des Route
- Anfangszeitpunkt der Bereitstellung der Route AZPT
- Endzeitpunkt der Bereitstellung der Route EZPT

Die in der Route angeordneten Switches, d.s. in Fig. 2 die vier Switches **220, 221, 222, 223** überprüfen, welche TVD der Switch im *Bereitstellungszeitraum,* (d.i. das Zeitintervall zwischen dem Anfangszeitpunkt (AZPT) der Bereitstellung des Route und dem Endzeitpunkt der Bereitstellung des Route (EZPT)), garantieren kann und welche NVD im Bestfall möglich wäre. Aufgrund dieser Informationen entscheidet der TTCM, ob ein Aufbau einer zeitgesteuerten Route entlang der bestehenden Route sinnvoll erscheint, oder ob eine neue Route gesucht werden muss.

Wenn der TTCM entscheidet, entlang der bestehenden Route eine zeitgesteuerte Route aufzubauen so beginnt die zweite Phase (*Reservierungsphase*). Der TTCM sendet eine *Reservierungsnachricht* mit dem folgenden Inhalt

- Gewünschte zeitgesteuerte Bandbreite des Route
- Anfangszeitpunkt der Bereitstellung der Route AZPT
- Endzeitpunkt der Bereitstellung der Route EZPT
- Kommitmentzeitpunkt der Reservierung KZPT
- Bildungszeitpunkt BZPT der Reservierungsnachricht
- Anfangsphase und Anfangsnachrichtenlänge

an alle in der Route angeordneten Switches. Der Bildungszeitpunkt der Reservierungsnachricht BZPT ist der Zeitpunkt, zudem die Reservierungsnachricht gebildet wurde. Die in der Route angeordneten Switches, d.s. in Fig. 2 die vier Switches **220, 221, 222, 223,** bearbeiten diese Reservierungsnachricht sequentiell in der Folge, in der sie in der Route **230** auftreten und reservieren die zeitgesteuerte Verbindung für den *Bereitstellungszeitraum.* Der aus der Sicht des TTCM letzte Switch der Route, d.i. in Fig. 2 der Switch **223,** meldet dem TTCM die erfolgreiche Reservierung mittels einer Bestätigungsnachricht, in der die garantierte TVD und die NVD in jedem Switch der Route enthalten ist. Weiters kann jeder Switch Vorschläge präsentieren, wie durch eine Änderung der Phase und Periode (bzw. der Nachrichtenlänge) bei gleicher Bandbreite die TVD in diesem Switch reduziert werden könnte. Nach Empfang dieser Informationen durch den TTCM kann der TTCM die Phase und Nachrichtenlänge verändern, um in einer nächsten Iteration der Reservierung die TVDs in den Switches zu reduzieren.

Wenn die Qualität der Verbindung eine vorab festgelegte *Güte* erreicht hat oder wenn eine Maximalzahl von Iterationen durchgeführt wurde, übergibt der TTCM das Resultat dem Endbenutzer zur Entscheidung.

Wenn der Endbenutzer das Resultat akzeptiert, so beginnt die dritte Phase, die *Accept Phase.* In der Accept Phase wird vom TTCM vor dem KZPT eine *Accept Nachricht* an alle beteiligten Switches gesendet, um die Reservierung der zeitgesteuerten Route zu bestätigen. Der Switch antwortet mit einer *Accept reply* Nachricht. Wenn bei einem Switch vor dem KZPT keine *Accept Nachricht* eintrifft, wird die (vorläufige) Reservierung gelöscht.

Wenn eine zeitgesteuerte Route für den spezifizierten Bereitstellungszeitraum reserviert wurde, so wird die Route vom Switch autonom zum EZPT (d.i. am Ende des Bereitstellungszeitraums) gelöscht.

Wenn eine Route nicht eine *point-to-point* sondern eine *multi-point* Topologie aufweist, so bekommt der TTCM die Informationen von allen Switches, die in der multi-point Route angeordnet sind. Der TTCM entscheidet dann aufgrund dieser Informationen, ob eine weitere Iteration erforderlich ist.

In einem großen Netzwerk, in dem viele Endbenutzer und Switches vorhanden sind, können gleichzeitig mehrere TTCMs aktiv sein. Durch unkoordinierte parallele Reservierungen könnte es zu einem Deadlock kommen. Der Deadlock wird verhindert, indem alle Reservierung aufgrund des Bildungszeitpunkts BZPT der Reservierungsnachricht, der in der Reservierungsnachricht enthalten ist, zeitlich geordnet werden. Wenn in einem Switch eine Reservierung durch eine Reservierungsnachricht mit einem späteren BZPT im Konflikt steht mit einer Reservierung mit einem früheren BZPT, so ist die Reservierung mit der späteren BZPT vom Switch zu annullieren. Aufgrund der vorhandenen globalen Zeit lassen sich so alle Entscheidungen im Netz temporal konsistent ordnen, so dass Konflikte konsistent aufgelöst werden können. Gleichzeitigkeit kann durch eine Ordnung der TTCMs aufgelöst werden. Um zu verhindern, dass ein *Intruder* fälschlicherweise Reservierungen vornimmt, kann der Reservierungsverkehr zwischen der TTCM und den Switches durch kryptographische Verfahren gesichert werden.

Das vorgeschlagenen innovative Verfahren funktioniert entsprechend dem *Fate-sharing Modell* von Clark [7], das vorsieht, dass alle wichtigen Zustandsdaten einer Verbindung in den Endpunkten des Netzwerkes verwaltet werden und es keine zentrale Instanz im Netz gibt, die alle zeitgesteuerten Verbindungen verwaltet. Das Verfahren baut auf die öffentlichen Standards von Ethernet, TT Ethernet [1,8] und der IEEE 1588 Uhrensynchronisation [9] auf und lässt sich daher in bestehende Netzwerke ohne wesentliche Modifikationen einbinden.

Das hier offen gelegte Verfahren zum selbstorganisierenden Aufbau von zeitgesteuerten Routen in einem großen Computernetzwerk bringt große wirtschaftliche Vorteile, da die Qualität und damit die Anwendbarkeit moderner Netzwerktechnik wesentlich erweitert wird.

**Verwendete Abkürzungen**

| | |
|---|---|
| AZPT | Anfangszeitpunkt des Bereitstellungszeitraums |
| BZPT | Bildungszeitpunkt der Reservierungsnachricht |
| EZPT | Endzeitpunkt des Bereitstellungszeitraums |
| KZPT | Kommitmentzeitpunkt der Reservierung |
| NVD | Notwenige Verweildauer einer TT Nachricht in einem Switch |
| TT | Time-Triggered |
| TTCM | Time-Triggered Connection Manager |
| TVD | Tatsächliche Verweildauer einer TT Nachricht in einem Switch |

**Zitierte Literatur**

[1] US 7,839,868. Kopetz, H. *Communication method and system for the transmission of time-driven and event-driven Ethernet messages.* Granted November 23, 2010.

[2] US 20100220744, Ungerman, J., *Intelligent Star Coupler for time-triggered communication protocol and method for communicating between nodes with a network using a time triggered protocol.* Publication Date September 2, 2010.

[3] US 20060242252, Jiang, S., *Extensible Scheduling of Messages on Time-Triggered Busses.* Publication Date Oct 26, 2006.

[4] US 20110066854; Poledna, S., *Method for Secure Dynamic Bandwidth Allocation in TT Ethernet.* Publication Date March 17, 2011

[5] US 20110032833 Zhang et al. *Optimizing of Traffic Routing for Data Center Services.* Publication Date Feb. 10. 2011

[6] Kopetz, H. Real-Time Systems, Design Principles for Distributed Embedded Applications. Springer Verlag. 2011.

[7] Clark, D. (1988). The Design Philosophy of the DARPA Internet Protocols. Computer Communication Review. Vol. 18(4). (pp. 106-114).

[8] SAE Standard AS6802 von TT Ethernet. URL: http://standards.sae.org/as6802

[9] IEEE 1588 *Standard for a Precision Clock Synchronization Protocol for Network Measurement and Control Systems.* URL: http://www.ieee1588.com/

**Patentansprüche**

1. Verfahren zur Erstellung von zeitgesteuerten deterministischen Kommunikationsrouten in einem großen Computernetzwerk, wobei alle betroffenen Endsysteme (210, 211, 212, 213, 214) und Switches (220, 221, 222, 223) des Computernetzwerkes über eine globale Zeit verfügen, wobei aufbauend auf eine bestehende Kommunikationsroute (230) zwischen zwei oder mehreren Endsystemen des Computernetzwerkes eine zeitgesteuerte deterministische Kommunikationsroute mit garantierter Bandbreite und minimaler Verzögerung für die Übertragung von zeitgesteuerten Nachrichten zwischen Endsystemen generiert wird, wobei eine Periode durch einen Winkel von 360° beschrieben ist, der Beginn (100) einer Periode mit der globalen Zeit synchronisiert ist, und wobei das Auftreten eines Ereignisses (101) innerhalb einer Periode durch Angabe des Winkels, d.i. die Phase, zwischen dem Beginn (100) der Periode und dem Ereignis (101) charakterisiert ist, und wobei eine zeitgesteuerte deterministische Kommunikationsroute zwischen zwei Endsystemen durch Spezifikation der Phase und Periode zu Beginn der Route, der Phase und Periode am Ende der Route, und der Länge der zeitgesteuerten Nachricht **gekennzeichnet ist, dadurch gekennzeichnet, dass** ein *Time-Triggered Connection Manager,* TTCM, eines Endsystems

   *) die zeitgesteuerte deterministische Kommunikationsroute in einer *Reservierungsphase* **durch** eine *Reservierungsnachricht* an jeden Netzwerk-Switch der bestehenden Kommunikationsroute bis zum Kommitmentzeitpunkt der Reservierung, KZPT, reserviert,
   *) und sodann diese zeitgesteuerte deterministische Kommunikationsroute in einer *Accept Phase* **durch** eine *Accept Nachricht* an die Netzwerk-Switches der bestehenden Kommunikationsroute vor dem KZPT bestätigt, und wobei

   jeder Netzwerk-Switch eigenständig die Reservierung bis zum KZPT entsprechend der an ihn vom TTCM gerichteten *Reservierungsnachricht* durchführt und die garantierte tatsächliche Verweildauer, TVD, einer Nachricht in dem Switch im *Bereitstellungszeitraum* sowie die nötige Verweildauer, NVD, einer Nachricht in dem Switch und Vorschläge, wie **durch** Änderung der Phase und Periode bei gleicher Bandbreite die TVD in dem Switch reduziert werden kann, dem anfordernden TTCM mitteilt, und nach Annahme der Reservierung durch den TTCM mittels einer *Accept Nachricht* die Reservierung mit einer *Accept Reply* Nachricht an den TTCM bestätigt, und wobei nach Empfang dieser Informationen der TTCM die Phase und Nachrichtenlänge verändert, um in einer nächsten Iteration der Reservierung die TVDs in den Switches zu reduzieren.

2. Verfahren nach Anspruch 1, **dadurch gekennzeichnet, dass** der *Time-Triggered Connection Manager,* TTCM, eines Endsystems in einer *Anfragephase,* vor der Reservierungsphase, mittels Anfragen an jeden Netzwerk-Switch entlang der bestehenden Kommunikationsroute zunächst die Realisierbarkeit der deterministischen Kommunikationsroute in Bezug auf den jeweiligen Netzwerk-Switch untersucht.

3. Verfahren nach Anspruch 1 oder 2, **dadurch gekennzeichnet, dass** ein Switch eine Reservierung verwirft, wenn er vor dem KZPT keine *Accept Nachricht* von dem die Reservierung anfordernden TTCM erhalten hat.

4. Verfahren nach einem der Ansprüche 1 bis 3, **dadurch gekennzeichnet, dass** ein Switch eine Reservierung für eine zeitgesteuerte Route nach dem Endzeitpunkt, EZPT, der Bereitstellung der Route löscht.

5. Verfahren nach einem der Ansprüche 1 bis 4, **dadurch gekennzeichnet, dass** der TTCM aufgrund von Informationen über die Güte der Route, wobei gilt:

$$\textit{Güte der Route} = \textit{(Tatsächliche Latenz)/(Minimale Latenz),}$$

   wobei Latenz die Latenz einer Nachricht entlang der Route bezeichnet, und den Vorschlägen zur Reduzierung der TVD, die der TTCM von den an der Route beteiligten Switches erhalten hat, die Reservierungsanfrage modifiziert und weitere Iterationen zum Aufbau einer zeitgesteuerten Route über selbige Switches veranlasst.

6. Verfahren nach einem der Ansprüche 1 bis 5, **dadurch gekennzeichnet, dass** es iterativ durchgeführt wird und der TTCM die Iterationen abbricht, wenn eine angestrebte Güte der Route erreicht wurde oder wenn eine maximale Anzahl an Iterationen durchlaufen wurde, wobei gilt:

$$Güte\ der\ Route = (Tatsächliche\ Latenz)/(Minimale\ Latenz),$$

wobei Latenz die Latenz einer Nachricht entlang der Route bezeichnet.

**7.** Verfahren nach einem der Ansprüche 1 bis 6, **dadurch gekennzeichnet, dass** die zeitgesteuerte deterministische Kommunikationsroute eine multi-point Topologie aufweist.

**8.** Verfahren nach einem der Ansprüche 1 bis 7, **dadurch gekennzeichnet, dass** in einem großen Netzwerk gleichzeitig mehrere TTCMs deterministische Kommunikationsrouten aufbauen können und die Anfragen der TTCMs in den Switches nach der zeitlichen Ordnung des Bildungszeitpunktes, BZPT, der Reservierungsnachricht behandelt werden.

**9.** Verfahren nach einem der Ansprüche 1 bis 8, **dadurch gekennzeichnet, dass** ein Switch eine Reservierung durch eine Reservierungsnachricht mit einem späteren Bildungszeitpunkt, BZPT, der Reservierungsnachricht, die im Konflikt steht mit einer Reservierung mit einem früheren BZPT, die Reservierung mit der späteren BZPT annulliert.

**10.** Verfahren nach einem der Ansprüche 1 bis 9, **dadurch gekennzeichnet, dass** der Nachrichtenverkehr zwischen der TTCM und den Switches durch kryptographische Verfahren gesichert wird.

**Claims**

**1.** A method for establishing time-triggered deterministic communication routes in a large computer network, wherein all affected end systems (210, 211, 212, 213, 214) and switches (220, 221, 222, 223) of the computer network have a global time, wherein for transmitting time-triggered messages between end systems a time-triggered deterministic communication route with guaranteed bandwidth and minimal delay is generated on the basis of an existing communication route between two or more end systems of the computer network,
wherein a period is described by an angle of 360°, the beginning (100) of a period is synchronized with the global time, and wherein the occurrence of an event (101) within a period is **characterized by** specification of the angle, i.e., the phase between the beginning (100) of the period and the event (101),
and wherein a time-triggered deterministic communication route between two end systems is **characterized by** specification of the phase and period at the beginning of the route, the phase and period at the end of the route, and the length of the time-triggered message,
**characterized in that** a *time-triggered connection manager,* TTCM, of an end system

*) reserves the time-triggered deterministic communication route in a *reservation phase* by sending a *reservation message* to each network switch of the existing communication route up to the reservation commitment time, KZPT,
*) and then confirms this time-triggered deterministic communication route in an *accept phase* by sending an *accept message* to the network switches of the existing communication route before the KZPT, and wherein

each network switch independently executes the reservation up to the KZPT corresponding to the *reservation message* set to it by the TTCM and provides the requesting TTCM the guaranteed actual dwell time, TVD, of a message in the switch in the *supply time* and the required dwell time, NVD, of a message in the switch and suggestions for how to reduce, with the same bandwidth, the TVD in the switch by changing the phase and period, and, after the reservation has been accepted by the TTCM by means of an *accept message,* the reservation is confirmed with an *accept reply* message to the TTCM, and wherein after receipt of this information the TTCM changes the phase and message length in order to reduce the TVDs in the switches in a next iteration of the reservation.

**2.** The method according to claim 1, **characterized in that**, in a *query phase,* prior to the reservation phase, the *time-triggered connection manager,* TTCM, of an end system, by means of querying at each network switch along the existing communication route, initially examines the feasibility of the deterministic communication route with respect to the specific network switch.

**3.** The method according to claim 1 or 2, **characterized in that** a switch rejects a reservation if, prior to the KZPT, it has not obtained an *accept message* from the TTCM requesting the reservation.

**4.** The method according to any of claims 1 through 3, **characterized in that** a switch deletes a reservation for a time-triggered route after the end time, EZPT, of the provision of the route.

**5.** The method according to any of claims 1 through 4, **characterized in that** the TTCM, based on information about the quality of the route, wherein:

$$quality\ of\ route = (actual\ latency)/(minimum\ latency),$$

wherein latency indicates the latency of a message along the route, and the suggestions for reducing the TVD that the TTCM obtained from the switches affected on the route, modifies the reservation query and initiates further iterations for building a time-triggered route via the same switches.

**6.** The method according to any of claims 1 through 5, **characterized in that** it is executed iteratively and the TTCM discontinues the iterations when a desired quality of the route has been attained or when a maximum number of iterations have been conducted, wherein:

$$quality\ of\ route = (actual\ latency)/(minimum\ latency),$$

wherein latency indicates latency of a message along the route.

**7.** The method according to any of claims 1 through 6, **characterized in that** the time-triggered deterministic communication route has a multi-point topology.

**8.** The method according to any of claims 1 through 7, **characterized in that** a plurality of TTCMs can build deterministic communication routes simultaneously in one large network and the queries of the TTCMs are handled in the switches according to the temporal order of the creation time, BZPT, of the reservation message.

**9.** The method according to any of claims 1 through 8, **characterized in that** a switch cancels a reservation through a reservation message having a later creation time, BZPT, of the reservation message that conflicts with a reservation having an earlier, BZPT, the reservation with the later BZPT.

**10.** The method according to any of claims 1 through 9, **characterized in that** the message traffic between the TTCM and the switches is secured using cryptographic methods.

## Revendications

**1.** Procédé d'établissement de routes de communication déterministes à commande temporelle dans un grand réseau d'ordinateurs, dans lequel tous les systèmes terminaux (210, 211, 212, 213, 214) et commutateurs (220, 221, 222, 223) concernés du réseau d'ordinateurs disposent d'un temps global, suivant lequel
sur la base d'une route de communication existante (230) entre au moins deux systèmes terminaux du réseau d'ordinateurs, est générée entre des systèmes terminaux une route de communication déterministe à commande temporelle avec une largeur de bande garantie et un retard minimal pour la transmission de messages à commande temporelle ;
dans lequel une période est décrite par un angle de 360°, le début (100) d'une période est synchronisé avec le temps global, et dans lequel l'apparition d'un événement (101) à l'intérieur d'une période est **caractérisée par** l'indication de l'angle, à savoir la phase entre le début (100) de la période et l'événement (101) ;
et dans lequel une route de communication déterministe à commande temporelle entre deux systèmes terminaux est **caractérisée par** la spécification de la phase et de la période au début de la route, de la phase et de la période à la fin de la route et de la longueur du message à commande temporelle,
**caractérisé par le fait qu'**un *gestionnaire de connexions à déclenchement temporel, TTCM,* d'un système terminal

\*) réserve la route de communication déterministe à commande temporelle dans une *phase de réservation* par l'envoi d'un *message de réservation* à chaque commutateur de réseau de la route de communication existante jusqu'au moment d'engagement de la réservation, KZPT,

*) et ensuite confirme cette route de communication déterministe à commande temporelle dans une *phase d'acceptation* par l'envoi d'un *message d'acceptation* au commutateur de réseau de la route de communication existante avant le KZPT, et dans lequel chaque commutateur de réseau exécute

indépendamment la réservation jusqu'au KZPT conformément au *message de réservation* adressé à celui-ci par le TTCM et communique au TCCM demandeur le temps de séjour réel garanti, TVD, d'un message dans le commutateur dans la *période de mise à disposition* ainsi que le temps de séjour nécessaire, NVD, d'un message dans le commutateur et des propositions pour réduire le TVD dans le commutateur par modification de la phase et de la période pour une même largeur de bande, et après acceptation de la réservation par le TTCM au moyen d'un *message d'acceptation* confirme la réservation en envoyant un *message de réponse d'acceptation* au TTCM, et dans lequel, après réception de ces informations, le TTCM modifie la phase et la longueur des messages afin de réduire les TVD dans le commutateur dans une itération suivante de la réservation.

2. Procédé selon la revendication 1, **caractérisé par le fait que** le *gestionnaire de connexions à déclenchement temporel,* TTCM, d'un système terminal examine tout d'abord la faisabilité de la route de communication déterministe par rapport au commutateur de réseau respectif dans une *phase de requête,* avant la phase de réservation, par l'envoi de requêtes à chaque commutateur de réseau le long de la route de communication existante.

3. Procédé selon l'une des revendications 1 ou 2, **caractérisé par le fait qu'**un commutateur rejette une réservation lorsqu'il n'a pas reçu de *message d'acceptation* provenant du TTCM demandant la réservation avant le KZPT.

4. Procédé selon l'une des revendications 1 à 3, **caractérisé par le fait qu'**un commutateur supprime une réservation pour une route à commande temporelle après le moment de fin, EZPT, de la mise à disposition de la route.

5. Procédé selon l'une des revendications 1 à 4, **caractérisé par le fait que** le TTCM modifie la requête de réservation sur la base des informations sur la qualité de la route, où :

$$\textit{Qualité de la route = (latence réelle)/(latence minimale)}$$

où latence désigne la latence d'un message le long de la route, et des propositions pour réduire le TVD reçu par le TTCM à partir des commutateurs participant à la route, et amène d'autres itérations afin d'établir une route à commande temporelle par l'intermédiaire des mêmes commutateurs.

6. Procédé selon l'une des revendications 1 à 5, **caractérisé par le fait qu'**il est exécuté de manière itérative et le TTCM interrompt les itérations lorsqu'une qualité recherchée de la route a été obtenue ou lorsqu'un nombre maximal d'itérations a été exécuté, où :

$$\textit{Qualité de la route = (latence réelle)/(latence minimale),}$$

où latence désigne la latence d'un message le long de la route.

7. Procédé selon l'une des revendications 1 à 6, **caractérisé par le fait que** la route de communication déterministe à commande temporelle présente une topologie multi-points.

8. Procédé selon l'une des revendications 1 à 7, **caractérisé par le fait que,** dans un grand réseau, plusieurs TTCM peuvent établir des routes de communication déterministes simultanément, et les requêtes des TTCM sont traitées dans les commutateurs conformément à l'ordre temporel du moment de formation, BZPT, du message de réservation.

9. Procédé selon l'une des revendications 1 à 8, **caractérisé par le fait qu'**un commutateur, en raison d'une réservation par un message de réservation ayant un moment de formation, BZPT, ultérieur du message de réservation qui entre en conflit avec une réservation ayant un BZPT antérieur, annule la réservation ayant le BZPT ultérieur.

10. Procédé selon l'une des revendications 1 à 9, **caractérisé par le fait que** le trafic de messages entre le TTCM et les commutateurs est sécurisé par des procédés cryptographiques.

**FIG. 1**

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0188746 A1
- US 7839868 B, Kopetz, H.
- US 20100220744 A, Ungerman, J.
- US 20060242252 A, Jiang, S.
- US 20110066854 A, Poledna, S.
- US 20110032833 A, Zhang

**In der Beschreibung aufgeführte Nicht-Patentliteratur**

- Fairness and QoS Enhancement Models and Techniques for Peer-to-Peer Content Sharing Systems. **MUGUREL IONUT ANDREIA et al.** Symbolic and numeric algorithms for scientific computing (SYNASC), 2009, 11th INTERNATIONAL SYMPOSIUM ON. IEEE, 26. September 2009
- The Time-Triggered Ethernet (TTE) Design. **KOPETZ et al.** Object-Oriented Real-Time distributed computing, 2005. ISORC 2005, Eighth IEEE International Symposium on Seattle. IEEE, 18. Mai 2005
- **KOPETZ, H.** Real-Time Systems, Design Principles for Distributed Embedded Applications. Springer Verlag, 2011
- **CLARK, D.** The Design Philosophy of the DARPA Internet Protocols. *Computer Communication Review,* 1988, vol. 18 (4), 106-114